# FASCICULE DE BREVET EUROPEEN

(11) **EP 3 027 401 B1**
(45) Date de publication et mention de la délivrance du brevet: **13.09.2017**
(21) Numéro de dépôt: 14759014.5
(22) Date de dépôt: 23.07.2014
(51) Int. Cl.: B29D 30/24

(54) **TAMBOUR MUNI DE SECTEURS MOBILES POUR LA CONFECTION D'UN PNEUMATIQUE**
REIFENAUFBAUTROMMEL MIT BEWEGLICHEN SEKTOREN
TIRE BUILDING DRUM PROVIDED WITH MOVABLE SECTORS

(30) Priorité: 01.08.2013 FR 1357683
(43) Date de publication de la demande: 08.06.2016
(73) Titulaire: Compagnie Générale des Etablissements Michelin, 63000 Clermont-Ferrand (FR)
(72) Inventeur: DELORME, Jean-Claude, F-63040 Clermont Ferrand Cedex 9 (FR); LEBLANC, Dominique, F-63040 Clermont Ferrand Cedex 9 (FR); DRUET, Michel, F-63040 Clermont Ferrand Cedex 9 (FR)
(74) Mandataire: Noel, Luminita
(86) Numéro de dépôt international: PCT/FR2014/051914
(87) Numéro de publication internationale: WO 2015/015095

(56) Documents cités:
- WO-A1-2013/054051
- US-A- 3 547 733
- US-A- 4 436 574
- US-A- 6 058 999
- US-A1- 2003 051 817
- US-A1- 2012 318 460

## Description

L'invention concerne les pneumatiques et en particulier la réalisation des ébauches d'enveloppe de pneumatique.

L'assemblage des éléments formant la bande de roulement d'une ébauche d'enveloppe de pneumatique de roue a lieu sur un tambour de confection, également appelé forme sommet. Ces éléments comprennent principalement de la gomme crue. Une fois assemblée, la bande de roulement est ôtée du tambour et déposée sur une carcasse réalisée séparément. L'association des deux forme un bandage. Après mise en forme de ce dernier, on obtient l'ébauche crue que l'on cuit ensuite pour la vulcanisation de la gomme.

Le document US 6058999 - A divulgue un tambour qui comprend un support et des secteurs formant une face circonférentielle du tambour. Le mouvement des secteurs est une combinaison de mouvements radiales et axiales de façon que le mouvement résultant suit une direction prédéterminée non radiale à l'axe de rotation du tambour et interceptant cet axe.

Le document US 3547733 - A divulgue un tambour comprenant un support et des secteurs formant une face circonférentielle du tambour, chaque secteur étant monté mobile par rapport au support suivant une direction prédéterminée non radiale à un axe de rotation du tambour et interceptant cet axe.

La demande WO 2013/054051 au nom des demanderesses divulgue un tambour qui comprend des secteurs primaires et secondaires formant sa face circonférentielle. Ces secteurs sont mobiles en direction radiale à l'axe de rotation du tambour pour permettre d'extraire la bande de roulement une fois celle-ci réalisée et aussi pour adapter le diamètre du tambour en fonction de celui de la bande de roulement à confectionner. Les secteurs primaires sont également mobiles suivant la direction axiale par rapport aux secteurs secondaires. Ainsi, lorsqu'on souhaite augmenter le diamètre du tambour, on éloigne de l'axe tous les secteurs puis on rapproche les secteurs secondaires des secteurs primaires en direction axiale afin de combler les espaces apparus entre les secteurs primaires et restaurer la continuité de la face circonférentielle pour qu'elle serve d'appui aux éléments de la bande de roulement.

Le tambour est réalisé de sorte que les secteurs primaires emportent les secteurs secondaires lors de leur mouvement radial. Pour permettre ensuite de déplacer les seconds par rapport aux premiers suivant la direction axiale, les secteurs primaires présentent des gorges de forme hélicoïdale dans lesquelles coulissent les secteurs secondaires. Les faces latérales des secteurs destinées à venir en contact mutuel ont aussi une forme hélicoïdale.

Ce tambour présente donc l'avantage de fournir pour la réalisation de la bande de roulement une surface d'appui continue et exempte de trou et de relief, ce qui préserve les propriétés de la gomme. De plus, on peut modifier à volonté le diamètre du tambour en fonction du modèle de pneumatique à réaliser.

Ce tambour est toutefois susceptible d'être amélioré. En effet, la présence des gorges et des faces hélicoïdales sur chaque secteur complique très sensiblement leur fabrication. De plus, la liaison entre les secteurs primaires et secondaires au moyen de ces gorges nécessite de fournir une quantité d'énergie très substantielle lorsqu'on souhaite déplacer les secteurs les uns par rapport aux autres notamment pour modifier le diamètre du tambour.

Un but de l'invention est de simplifier la réalisation du tambour et de réduire l'énergie à fournir pour déplacer les secteurs les uns par rapport aux autres.

À cet effet, on prévoit selon l'invention un tambour de confection d'une ébauche d'enveloppe de pneumatique comme défini dans la revendication 1, ledit tambour comportant un support et des secteurs formant une face circonférentielle du tambour, chaque secteur présentant une face externe circonférentielle ayant un contour de forme générale trapézoïdale et étant monté mobile par rapport au support suivant une direction prédéterminée non radiale à un axe de rotation du tambour et interceptant cet axe.

Ce mode de déplacement des secteurs permet de simplifier leur définition géométrique et de réduire l'énergie à fournir pour leurs déplacements relatifs, tout en obtenant une surface de travail quasi continue. Concernant la forme trapézoïdale, il faut comprendre le mot trapèze comme faisant référence à tout quadrilatère qui présente deux côtés parallèles de longueurs différentes.

Des formes préférentielles de l'invention sont définies dans les revendications dépendantes 2 à 15.

On peut prévoir que chaque secteur est monté mobile à translation, notamment à coulissement rectiligne, par rapport au support suivant la direction prédéterminée.

Avantageusement, chaque secteur est monté mobile par rapport au support au moyen d'une rampe s'étendant suivant la direction prédéterminée.

Dans un mode de réalisation, chaque secteur est relié au support par une équerre portant la rampe.

Avantageusement, le tambour est agencé de sorte que l'un quelconque des secteurs ne peut pas être déplacé par rapport au support suivant la direction prédéterminée sans que les autres secteurs se déplacent eux aussi par rapport au support suivant les directions prédéterminées qui leur sont propres.

On peut prévoir que les secteurs forment deux sous-ensembles agencés de sorte que, lorsque chacun des secteurs de l'un des sous-ensembles se déplace suivant la direction prédéterminée par rapport au support, il se déplace le long de l'axe dans un premier sens et les secteurs de l'autre sous-ensemble se déplacent le long de l'axe dans un deuxième sens opposé au premier sens.

De préférence, le tambour est agencé de sorte que les deux sous-ensembles sont l'image l'un de l'autre par une symétrie axiale.

Dans un mode de réalisation, le tambour comprend au moins un équipage monté coulissant par rapport au support suivant la direction de l'axe de rotation et relié à plusieurs des secteurs.

Avantageusement, le tambour est agencé de sorte que, lorsque les secteurs s'étendent à une même distance de l'axe de rotation, quelle que soit cette distance, les faces externes circonférentielles des secteurs ont des arêtes présentant chacune une corde confondue avec la corde correspondante du secteur adjacent.

Ainsi, bien que ces faces ne soient pas contiguës sur toute leur longueur, le fait que leurs cordes soient géométriquement confondues permet de limiter considérablement l'espace entre ces faces et donc de maintenir une quasi continuité entre elles. Cet agencement est suffisant pour la mise en place de la gomme crue. Il s'agit d'un bon compromis entre la nécessité de préserver les caractéristiques de la gomme et la facilité de conception géométrique et de fabrication du tambour.

De préférence, chaque secteur présente deux faces latérales principales planes agencées pour venir en regard des faces homologues des secteurs adjacents.

Le fait que ces faces soient planes facilite leur définition géométrique et leur fabrication.

Avantageusement, les secteurs peuvent présenter un traitement de surface externe anti-collant.

Ainsi, la gomme posée à la surface du tambour étant chaude, le traitement de cette surface facilite son extraction par la suite.

Dans un mode de réalisation, le plan de chaque face latérale est l'image d'un plan radial à l'axe de rotation par une première rotation autour d'un premier axe perpendiculaire à ce dernier, et par une seconde rotation autour d'un second axe perpendiculaire au premier axe, les deux rotations ayant lieu chacune sur un angle inférieur à 90°.

Cette définition de l'orientation des faces les rend compatibles avec les mouvements des secteurs et limite la génération d'espaces dans la face confidentielle.

Par exemple, l'angle de la seconde rotation est compris entre 2 et 5°.

Un tel choix permet de limiter très sensiblement les discontinuités dans la face circonférentielle.

Avantageusement, certains des secteurs sont aptes à venir en appui contre les autres secteurs suivant la direction radiale à l'axe de rotation du tambour.

Ainsi les secteurs qui servent d'appui aux autres encaissent une grande partie des sollicitations radiales générées par la mise en place des éléments de la bande de roulement.

De préférence, chaque secteur est monté mobile par rapport au support suivant une direction radiale à l'axe de rotation du tambour.

On prévoit donc que les secteurs sont déplaçables non seulement suivant la direction inclinée précitée mais également suivant une direction perpendiculaire à l'axe. En effet, lorsqu'on souhaite extraire du tambour la bande de roulement réalisée, on rapproche de l'axe au moins certains des secteurs de façon à ménager des espaces entre le tambour et la bande de roulement. C'est l'opération de collapsage du tambour. Il est alors possible de saisir la bande en introduisant des moyens de préhension dans les espaces ou en utilisant un anneau de transfert périphérique.

On peut prévoir ensuite de déplacer tous les secteurs en direction radiale de façon à libérer totalement la bande de roulement par rapport au tambour. Le mécanisme de commande des secteurs connu à cette fin comprend une première came apte à déplacer certains secteurs et une deuxième came apte à déplacer les autres. Un actionneur permet de faire tourner l'une des cames par rapport à l'autre et ainsi, au début du processus, rapprocher les premiers secteurs de l'axe sans déplacer les autres. Cet agencement est toutefois susceptible d'être amélioré. En effet, ce processus requiert d'abord de commander l'actionneur pour faire tourner une came par rapport à l'autre puis de commander un autre actionneur assurant le déplacement simultané des deux cames. La commande du tambour pour la libération de la bande de roulement est donc relativement compliquée. Et le mécanisme est lui aussi complexe.

C'est la raison pour laquelle, avantageusement, le tambour selon l'invention comporte au moins une came de commande d'un déplacement radial des secteurs par rapport à l'axe de rotation du tambour, la came étant agencée de sorte qu'un mouvement monotone de la came entraîne d'abord le déplacement radial de certains des secteurs sans modifier une position radiale des autres secteurs, puis entraîne le déplacement radial de tous les secteurs simultanément.

On rappelle qu'une fonction monotone est une fonction dont le sens de variation ne change pas. Sur un intervalle donné, il s'agit donc d'une fonction croissante ou bien d'une fonction décroissante mais pas des deux à la fois. Par « mouvement monotone », on entend donc que le mouvement de la came ne change pas de sens.

C'est donc le même organe et le même mouvement de ce dernier sans changement de sens qui assure les deux phases du déplacement des secteurs. La commande du collapsage du tambour est donc simplifiée.

On prévoit également selon l'invention un procédé de fabrication d'une enveloppe de pneumatique comme défini dans la revendication 16, dans lequel procédé on assemble une partie au moins d'une bande de roulement d'une ébauche crue de l'enveloppe sur un tambour conforme à l'invention.

Nous allons maintenant décrire un mode de réalisation de l'invention à titre d'exemple non limitatif en référence aux dessins annexés sur lesquels :
- les figures 1 à 3 sont des vues en perspective illustrant trois configurations des secteurs du tambour dans un mode de réalisation de l'invention ;
- la figure 4 est un diagramme montrant un coulissement de chaque secteur ;
- les figures 5 à 7 sont des vues en coupe des secteurs montrant trois configurations du tambour lors de l'opération de collapsage ;
- les figures 8 à 18 sont des vues et des diagrammes illustrant le principe de la construction géométrique des faces latérales des secteurs ;
- les figures 19 et 20 sont des vues respectives en perspective du tambour et des deux types de secteurs;
- la figure 21 est une vue en perspective et en coupe du tambour de la figure 19 ;
- les figures 22 à 25 sont des vues en perspective illustrant la liaison des secteurs au support ;
- les figures 26 et 27 sont des vues en perspective des deux faces d'une des cames ;
- les figures 28 et 29 sont vues en perspective de la partie centrale du tambour avec certaines pièces ôtées ; et
- les figures 30 et 31 sont des vues en coupe de la partie centrale du tambour illustrant respectivement ses configurations de plus petit et de plus grand diamètre.

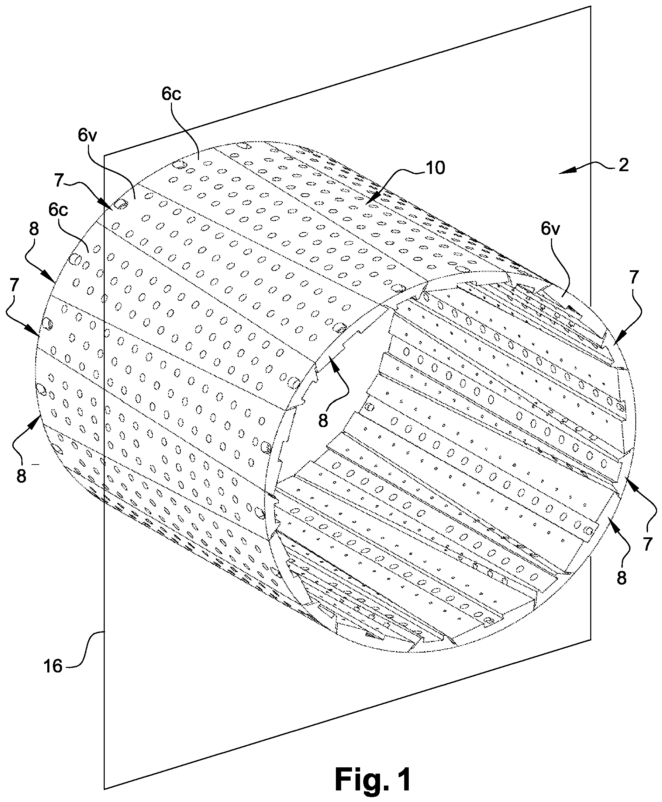

On a illustré à la figure 1 un tambour 2 selon un mode de réalisation de l'invention. Ce tambour sert à l'assemblage des éléments formant une bande de roulement pour une ébauche crue de pneumatique. Le pneumatique est destiné à une roue de véhicule qui pourra être un véhicule utilitaire, un véhicule de type léger, un véhicule de tourisme, un véhicule de type poids lourd ou encore un engin de génie civil.

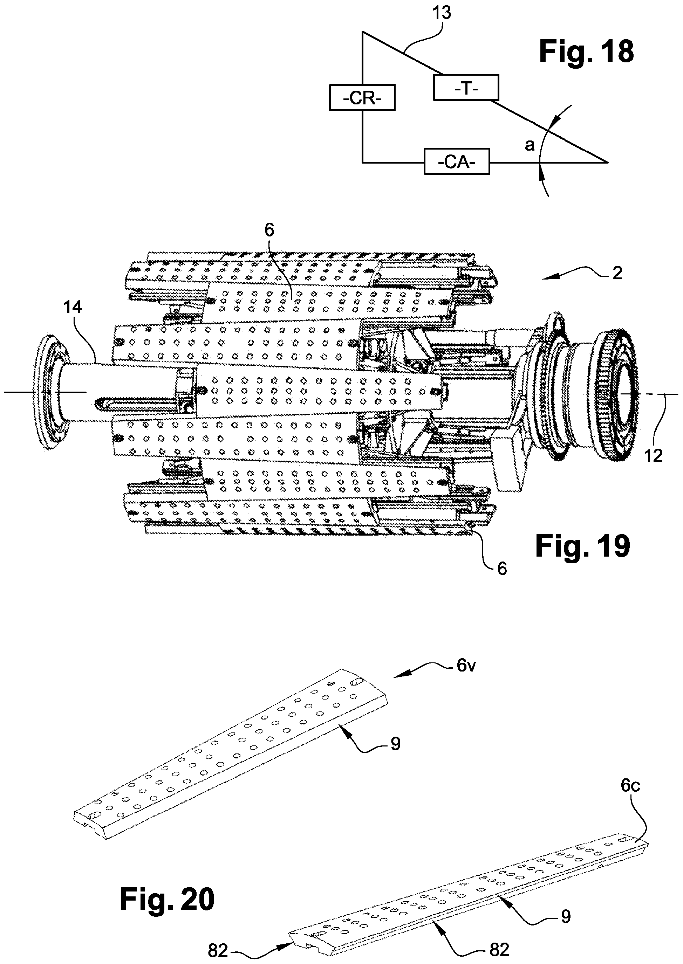

Le tambour comprend un support 14 illustré notamment à la figure 19 et ayant une forme générale à symétrie de révolution d'axe 12 qui forme l'axe de rotation du tambour. Dans toute la suite, et sauf indication contraire, la direction axiale désigne une direction parallèle à l'axe 12 et la direction radiale une direction quelconque radiale à ce dernier, c'est-à-dire qui lui est perpendiculaire et qui intercepte donc cet axe.

S'agissant d'un outillage d'assemblage d'un sommet pour une ébauche, la surface de cet outillage est quasi-continue, à diamètre variable et permet en particulier la construction d'une bande de roulement par empilage successif de bandelettes de gomme crue posées à chaud. A cet effet, elle présente un traitement de surface anti-collant pour permettre la pose de la gomme chaude et faciliter son extraction par la suite. La face circonférentielle du tambour est notamment exempte de relief ou de décrochement en forme de marche d'escalier souvent rencontrés dans les tambours de l'état de la technique. Cela évite la déformation des bandelettes de gomme et les défauts de fabrication tels que les soufflures apparaissant lors de la cuisson.

Le tambour 2 présente des secteurs 6c, 6v, qui s'étendent en périphérie du support 14 pour former la face circonférentielle 10 du tambour qui constitue la face de travail sur laquelle sont disposés les éléments de la bande de roulement. Cette face 10 a, en l'espèce, une forme générale cylindrique à section circulaire dans un plan perpendiculaire à l'axe 12. Le tambour forme donc ici ce que l'homme du métier désigne souvent par une « forme plate ».

Comme on le verra dans la suite, une des caractéristiques de ce tambour est que les secteurs sont montés pour se déplacer suivant une direction linéaire inclinée par rapport à l'axe 12 et interceptant cet axe sans lui être perpendiculaire. Au cours de ce mouvement, chaque secteur suit une trajectoire rectiligne par rapport à l'axe, ce qui permet de simplifier la définition et l'usinage des faces de chaque secteur, notamment leurs faces latérales en contact les unes avec les autres, ainsi que le mécanisme de guidage de ces secteurs. En particulier, comme on le verra, les faces latérales sont planes, ce qui les rend facilement usinables.

Les secteurs 6c, 6v sont ici au nombre de 18 mais ce nombre pourrait varier. Chaque secteur présente un plan de symétrie dans lequel est inscrit l'axe 12. Il présente une face externe cylindrique 10 ayant des contours de forme générale trapézoïdale. Ces contours sont délimités par quatre faces planes, à savoir deux faces d'extrémité 7 et 8, la face 7 étant plus courte que la face 8 en direction circonférentielle, et deux faces latérales 9. Les faces 7 et 8 sont perpendiculaires à l'axe 12.

On distingue en l'espèce deux types de secteurs. Les secteurs 6c du premier type sont appelés « secteurs clés » et les secteurs 6v du second type « secteurs voûtes ». Ces deux types de secteurs forment ainsi deux sous-ensembles respectifs. Tous les secteurs du premier type sont identiques entre eux. Il en est de même pour les secteurs du second type. Suivant la direction circonférentielle à l'axe 12, les secteurs du premier type sont disposés en alternance avec ceux du second type mais sont agencés tête-bêche par rapport à ceux-ci.

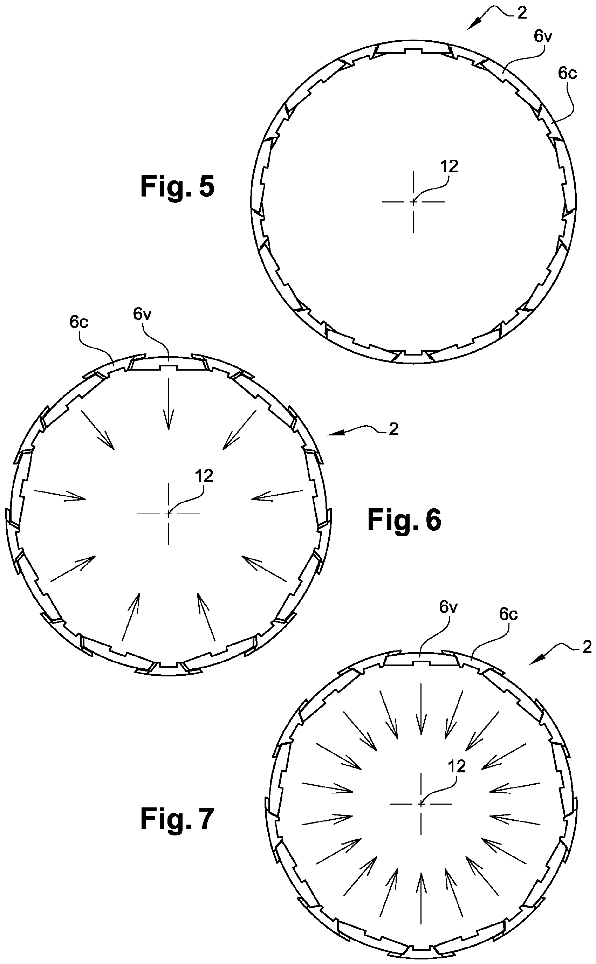

Comme illustré sur les figures 1 et 5, le tambour est agencé de sorte que les secteurs peuvent venir en contact mutuel en direction circonférentielle par leurs faces latérales 9. Chaque secteur vient ainsi en contact avec les deux secteurs adjacents dans la succession. Les secteurs clés et les secteurs voûtes étant régulièrement alternés, chaque secteur clé est contigus à deux secteurs voûtes et réciproquement.

De plus, les faces latérales 9 sont inclinées de sorte que chaque secteur clé est en appui en direction de l'axe sur les deux secteurs voûtes voisins. Lors de la construction de la bande de roulement, une sollicitation radiale exercée sur ce secteur est donc reportée sur les deux secteurs voûtes voisins.

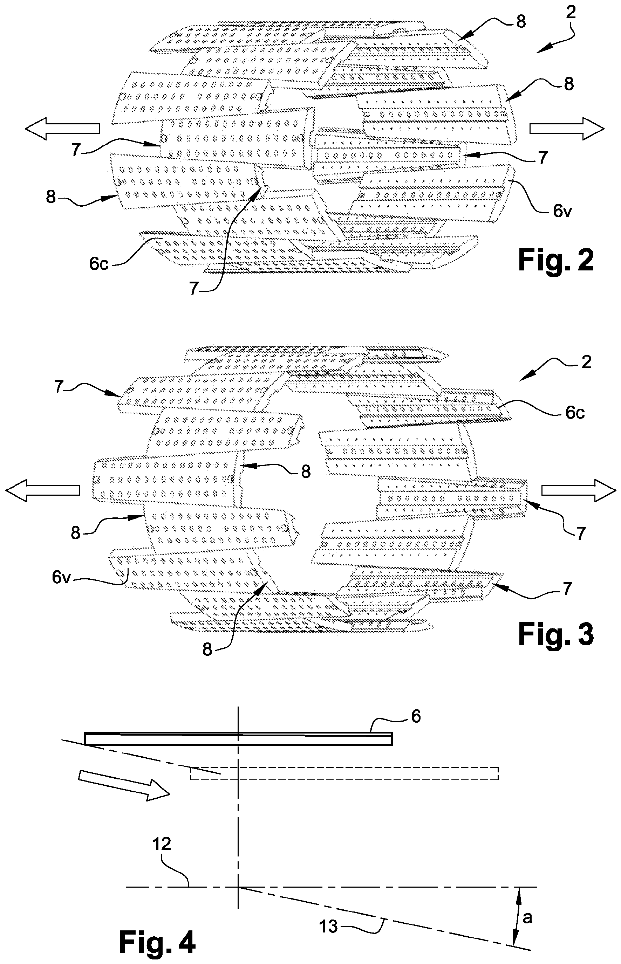

Les secteurs peuvent être déplacés les uns par rapport aux autres pour modifier le diamètre de la face 10. Les configurations de plus petit et de plus grand diamètres du tambour ont été illustrées respectivement aux figures 2 et 3, la figure 1 montrant sa configuration de diamètre moyen.

Sur la figure 2, la distance entre les petites faces d'extrémité 7 des sous-ensembles est plus courte que la distance entre leurs grandes faces d'extrémité 8. C'est ainsi que les secteurs de chaque sous-ensemble dépassent de ceux de l'autre sous-ensemble suivant la direction axiale par leurs grandes extrémités 8. La surface circonférentielle continue offerte pour la réalisation de la bande de roulement se trouve délimitée par les petites faces 7.

Dans la configuration de la figure 3, c'est exactement l'inverse.

Dans la configuration de la figure 1, les petites extrémités 7 des secteurs de l'un quelconque des sous-ensembles s'étendent dans le même plan que les grandes faces extrémités 8 des secteurs de l'autre sous-ensemble. C'est donc cette fois toute la face externe 10 des secteurs qui forme la face de travail du tambour. Dans cette configuration, le tambour est réglé à son diamètre moyen, et la face externe 10 est parfaitement cylindrique.

L'orientation de chaque face latérale 9 est choisie judicieusement afin de:
- permettre les mouvements radiaux nécessaires à l'expansion ou au collapsage de l'outillage ;
- permettre le déplacement des secteurs nécessaire au réglage du diamètre de l'outillage ;
- permettre la conservation du contact entre les faces latérales 9 quel que soit le diamètre choisi afin de préserver autant que possible la continuité de sa face externe ; et
- limiter l'écart d'altitude radiale entre la corde et l'arc d'ellipse sur les arêtes extérieures des secteurs. Comme on le verra dans la suite, ces arêtes sont le résultat de l'intersection entre la face cylindrique extérieure du secteur et les plans de ses faces latérales 9.

Deux mécanismes différents assurent les mouvements de chaque secteur par rapport au support.

Le premier mécanisme permet le réglage du diamètre de l'outillage en assurant la couverture dimensionnelle demandée. En l'espèce, ce diamètre peut être modifié sur une plage de 100 mm.

Lors de ce réglage, en référence à la figure 4, à partir d'une configuration dans laquelle tous les secteurs s'étendant la même distance de l'axe 12, chaque secteur 6c, 6v coulisse par rapport au support suivant une direction prédéterminée 13 non radiale à l'axe 12 et interceptant cet axe. Au cours de ce mouvement, le secteur reste donc parallèle à l'axe 12. L'angle a formé par cette direction et l'axe est ici le même pour tous les secteurs.

De plus, ce mécanisme est agencé de sorte que l'un quelconque des secteurs ne peut pas être déplacé de cette façon par rapport au support sans que les autres secteurs se déplacent eux aussi par rapport au support suivant les directions prédéterminées qui leur sont propres. Plus précisément, lorsque les secteurs de l'un quelconque des sous-ensembles se déplacent suivant la direction 13 par rapport au support, ce déplacement présente une composante le long de l'axe orientée dans un premier sens et les secteurs de l'autre sous-ensemble se déplacent avec une composante le long de l'axe orientée dans un deuxième sens opposé au premier sens. Les secteurs clés se déplacent donc dans un premier sens le long de l'axe et les secteurs voûte dans le sens opposé, leur vitesse absolue étant la même. A un instant quelconque du mouvement, les secteurs restent donc tous à la même distance de l'axe 12.

A un instant quelconque au cours de ce mouvement, les deux sous-ensembles sont l'image l'un de l'autre par une symétrie axiale. L'axe de symétrie est perpendiculaire à l'axe de rotation 12. On a illustré à la figure 1 le plan transversal médian 16 du tambour, perpendiculaire à l'axe 12. A un instant quelconque au cours du mouvement, les petites faces d'extrémité 7 de tous les secteurs s'étendent à la même distance de ce plan. Il en est de même de leurs grandes faces extrémités 8.

La plage de diamètre à couvrir et la largeur de la zone utile sur l'outillage peuvent être modifiées en jouant sur la géométrie des faces latérales 9 combinée à la valeur de l'angle de la direction 13, et sur la longueur des secteurs combinée à leur course par rapport au plan médian.

Par ailleurs, le second mécanisme est réalisé de sorte que chaque secteur est monté mobile par rapport au support suivant une direction radiale à l'axe 12. Les secteurs sont donc mobiles entre deux positions. La première est une position de travail permettant la construction de la bande de roulement, l'outillage ayant le diamètre choisi pour ce travail, comme illustré à la figure 5. La seconde est une position collapsée de l'outillage obtenue à l'issue du mouvement radial des secteurs en direction de l'axe. Cette position permet le décollement des secteurs par rapport à la bande de roulement réalisée et le retrait de l'outillage de l'intérieur de celle-ci. Plus précisément, en l'espèce, ce mécanisme est agencé de sorte qu'il entraîne d'abord le déplacement des secteurs voûtes 6v en direction de l'axe sans modifier la position radiale des secteurs clés 6c comme illustré à la figure 6, puis entraîne le déplacement radial de tous les secteurs simultanément, comme illustré la figure 7. En outre les secteurs clés présentent des dégagements latéraux sous leurs faces latérales 9 leur permettant de recevoir une partie des secteurs voûtes adjacents à l'issue de la première phase du mouvement. On voit donc qu'il est avantageux de prévoir un nombre pair de secteurs. Notamment, comme les secteurs voûtes descendent en premier et sont alternés avec les secteurs clés, ces derniers forment des zones de support pour la bande qui sont régulièrement réparties et préservent son uniformité dimensionnelle en attendant son transfert sur un autre poste et durant ce transfert.

Nous présenterons plus loin le détail de ces deux mécanismes. Nous allons d'abord expliquer la définition géométrique des secteurs.

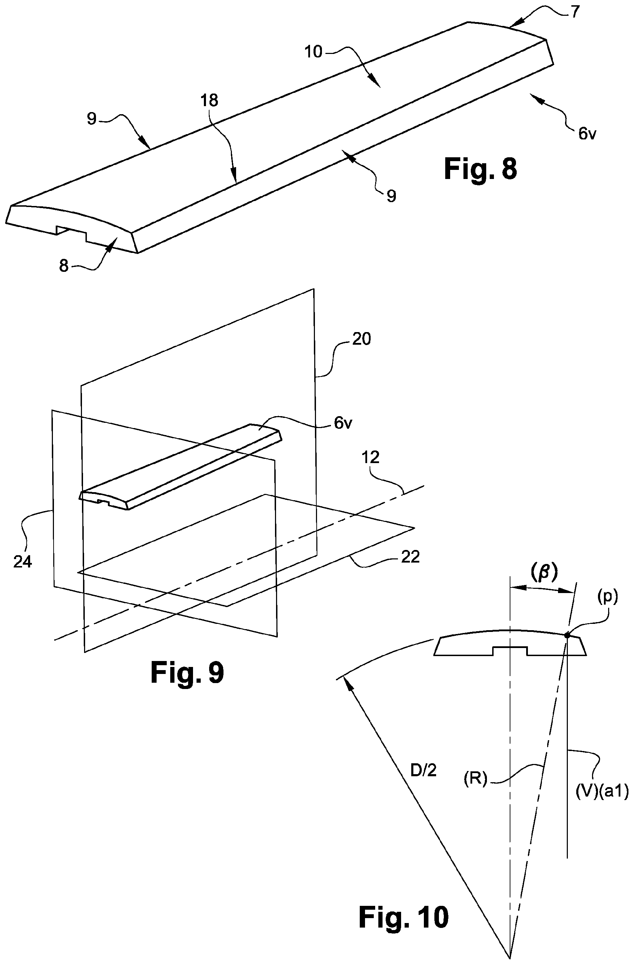

Comme illustré la figure 8, dans la face externe circonférentielle cylindrique 10 de chaque secteur, le diamètre du cylindre est choisi pour correspondre au diamètre moyen de la plage de variation de diamètre à couvrir avec l'outillage, afin de limiter les écarts géométriques entre ce diamètre moyen et les diamètres minimal et maximal de réglage du tambour.

Chaque face latérale 9 est inscrite dans un plan incliné par rapport à l'axe 12, les deux faces 9 d'un même secteur formant un coin. Chaque arête 18 formant l'intersection entre la face 10 et l'une des faces 9 est donc un arc d'ellipse. La figure 8 présente un secteur voûte mais les secteurs clés sont définis de façon analogue. La seule différence réside dans l'orientation des faces latérales 9, qui le sont en direction de l'intérieur du tambour pour les secteurs clés et en direction de l'extérieur pour les secteurs voûtes.

On a illustré à la figure 9 les plans de référence utilisés pour la définition du secteur, à savoir le plan de face 20 passant par l'axe 12 et formant le plan de symétrie du secteur, le plan de droite 24 qui est perpendiculaire à l'axe 12 et le plan de dessus 22 qui est perpendiculaire aux deux précédents.

Il s'agit donc de déterminer l'orientation du plan de la face 9.

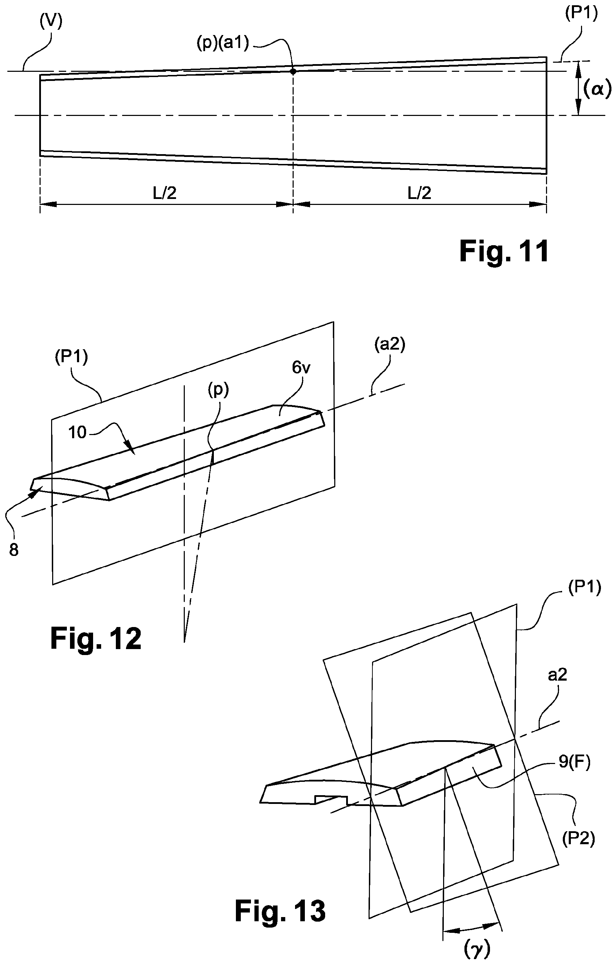

On définit tout d'abord un point p d'une génératrice du cylindre de la face 10, ce point passant par un rayon R d'une section du cylindre et étant repéré par rapport au plan de face 20 par un angle β autour de l'axe 12, cet angle étant égal à (360/N)/2 où N est le nombre de secteurs. Ce point est situé au milieu de la longueur de la génératrice sur le secteur comme on le voit sur les figures 11 et 12. En l'espèce, N vaut 18 et β 10°.

En référence aux figures 10 et 11, on définit ensuite un plan V parallèle au plan de face 20 et passant par le point *p*.

On définit aussi un axe a1 perpendiculaire à l'axe 12 , situé dans le plan V et passant par le point *p*.

On définit encore un plan P1 comme l'image du plan V par une rotation autour de l'axe a1 selon un angle α, comme illustré à la figure 11.

En référence à la figure 12, on définit dans le plan P1 un axe a2 parallèle au plan de dessus 22 et passant par le point *p*.

En référence à la figure 13, on défini un plan P2 comme l'image du plan P1 par une rotation autour de l'axe a2 selon un angle γ. Le plan P2 est celui de la face latérale 9.

Les deux rotations sont effectuées autour d'angles respectifs inférieurs à 90°. En l'espèce, on choisit γ égal à 20°.

Le plan de la face latérale 9 résulte donc d'une translation du plan radial formant le plan longitudinal de symétrie du secteur, puis d'une rotation autour de l'axe a1 et d'une nouvelle rotation autour de l'axe a2.

On définit donc de cette façon les faces 9 des secteurs clés. Celles des secteurs voûtes sont définies avec la même méthode selon des angles complémentaires de sorte que, lorsque les secteurs clés et voûtes sont assemblés sur le tambour et que ce dernier est en position de travail, les faces 9 des secteurs adjacents sont contiguës les unes aux autres.

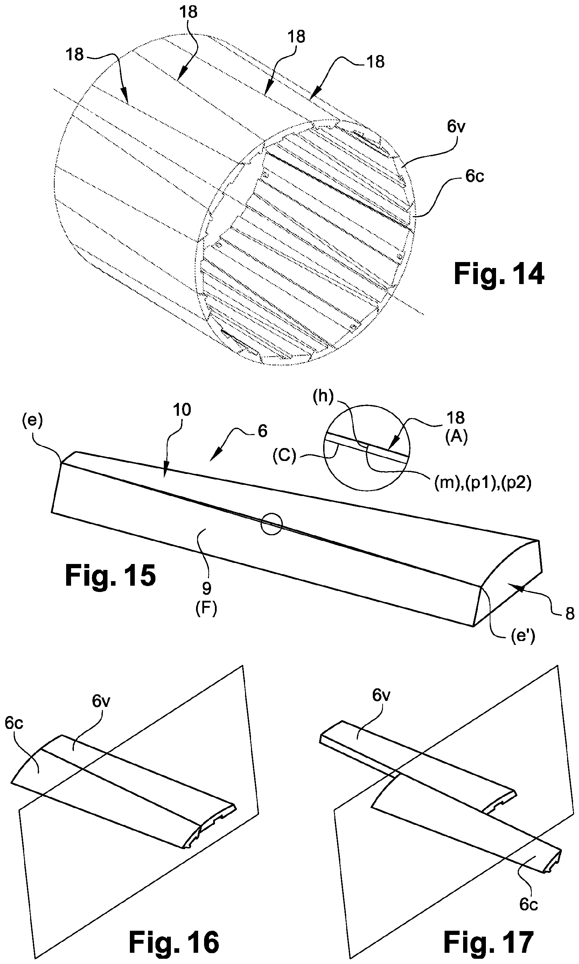

Comme illustré à la figure 14, lorsque les secteurs sont positionnés de sorte que le diamètre extérieur du tambour est identique au diamètre d'usinage de la face 10, c'est-à-dire au diamètre moyen d'utilisation du tambour, tout se passe comme si la face extérieure du tambour était un cylindre découpé en N secteurs dont on aurait usiné les faces latérales 9 définies selon la méthode décrite plus haut à l'aide d'une lame de scie d'épaisseur nulle. Les arêtes 18 des secteurs adjacents sont alors confondues et la continuité de surface du cylindre est théoriquement parfaite. Les tolérances d'usinage des différentes pièces et les jeux nécessaires au fonctionnement de l'outillage introduisent une altération de cette géométrie de l'ordre de quelque centièmes de millimètre.

Si dans cette position de réglage au diamètre moyen les arêtes 18 des secteurs adjacents sont parfaitement confondues, ce n'est plus le cas lorsque l'outillage est réglé à un diamètre différent. En effet, l'arc d'ellipse de l'arête d'un secteur est définie par l'intersection du cylindre de diamètre moyen, fixe, et du plan de la face 9, dont la position est géométriquement fixe par rapport à l'axe du cylindre. Lors du réglage du tambour à un diamètre différent, l'arc d'ellipse fictif résultant de l'intersection du nouveau cylindre du tambour et de la nouvelle position de la face 9 aurait un profil différent de celui de l'arête 18. A cette nouvelle position, les arêtes 18, dont le profil est figé par construction, ne peuvent donc plus être confondues avec la face du cylindre de nouveau diamètre. La continuité de surface d'un secteur à l'autre est donc plus ou moins altérée, selon la valeur de réglage du diamètre extérieur de l'outillage et l'angle a retenu pour la construction des secteurs.

On s'efforce donc de minimiser le décalage entre les arêtes 18 de deux secteurs adjacents en jouant sur l'angle α, qui devra être choisi petit pour les petits diamètres d'outillage, afin d'obtenir une faible courbure de l'arête 18. L'angle α pourra augmenter en fonction du diamètre de la face 10. Typiquement, dans cet exemple, α = 2° pour une plage de variation de diamètre de 100 mm, et des diamètres d'outillage compris entre 500 et 700 mm.

Il s'agit ensuite de déterminer l'angle a de la direction 13 de déplacement des secteurs par rapport à l'axe.

On cherche à maintenir les arêtes 18 de secteurs adjacents les plus proches possible, sans toutefois pouvoir les confondre. Dans la méthode utilisée ici, on choisit pour cela de maintenir confondues les *cordes* C des arêtes 18, en référence à la figure 15.

L'altération de la surface extérieure de l'outillage résulte du décalage d'altitude entre deux arêtes 18 de secteurs adjacents. Le maximum de cette distance peut être évalué comme la hauteur maximale h comprise entre l'arc 18 et sa corde C dans le plan de la face 9. En effet, lors du déplacement de deux secteurs adjacents selon la trajectoire d'angle *a*, à partir du diamètre moyen, tout point p1 pris sur la corde de l'un des secteurs, confondu au départ avec le point p2 pris sur la corde de l'autre secteur, dans le plan de la face de jonction, s'élève radialement et se déplace symétriquement au plan médian de l'outillage de la même valeur radiale que le point p2. On désigne par e et *e'* les extrémités de la corde de l'arête 18. Les cordes C étant maintenues colinéaires lors du déplacement, l'écart d'altitude maximal entre les arêtes 18 des deux secteurs sera donc constaté lorsque le point e ou le point e', selon le sens de déplacement, sera confondu avec le milieu m de la corde C du secteur voisin. L'écart d'altitude maximal, dans le plan de la face 9, sera donc égal à la hauteur *h.*

Typiquement, dans notre construction, cet écart est au maximum de l'ordre de 0.25 mm. L'expérience de la fabrication d'enveloppes sur un outillage similaire montre qu'une limite acceptable est de l'ordre de 0.3 à 0.4 mm entre deux secteurs consécutifs. De telles valeurs sont compatibles avec des efforts classiques de rouletage de bandelette (de l'ordre de 1 daN /mm de largeur de roulette) et des vitesses de pose allant par exemple jusqu'à 400 mètres par minute.

Pour déterminer l'angle *a*, nous cherchons à définir l'élévation radiale d'un secteur lors de son déplacement suivant la direction 13, lorsque les conditions suivantes sont satisfaites:
- les secteurs clés et voûtes se déplacent symétriquement par rapport au plan médian de l'outillage, de la même valeur radiale lors de leur déplacement, et en restant parallèles à l'axe 12 ;
- les faces 9 des secteurs consécutifs sont en contact à toutes les positions de travail, et
- les cordes C de deux secteurs jointifs restent colinéaires.

L'expression de ces conditions peut être matérialisée dans deux positions particulières illustrées respectivement aux figures 16 et 17:
- lors du réglage de l'outillage au diamètre d'usinage des secteur (position initiale), c'est-à-dire à la position de diamètre moyen, et
- dans la position dans laquelle l'extrémité *e* ou *e'* d'un secteur est positionnée au milieu de la corde du secteur voisin (position finale), i.e. au diamètre minimal ou maximal du tambour.

Dans ces deux positions, des calculs trigonométriques classiques permettent de définir les coordonnées cartésiennes de points particuliers des secteurs et finalement le rayon de l'outillage dans la seconde position. Il suffit ensuite de résoudre le triangle illustré à la figure 18 dans lequel figurent la course radiale CR et la course axiale CA du secteur lorsqu'il parcourt sa trajectoire inclinée de longueur T. En l'espèce, la course axiale est égale au quart de la longueur du secteur.

L'angle a est donc obtenu par : a = arctg (CR/CA).

Pour un angle α donné, l'écart d'altitude radial entre deux secteurs, lors du réglage aux positions de développement minimal ou maximal, est d'autant plus faible que le diamètre moyen de l'outillage, qui correspond au diamètre D d'usinage des secteurs, est grand. En effet, lors de l'augmentation du diamètre D, la hauteur *h* diminue, car l'arc d'ellipse de l'arête 18 s'aplatit.

On pourra donc utiliser cette propriété lors de la conception d'outillages de plus grand diamètre: pour obtenir un écart d'altitude entre secteurs sensiblement constant quel que soit le diamètre D, on augmentera l'angle α.

Cette méthode a un impact positif sur la masse et l'inertie de l'outillage car:
- en augmentant α, il faut augmenter *a* ;
- pour une élévation constante, la course axiale diminue ;
- la longueur des secteurs nécessaire à une même plage de largeur utile de l'outillage diminue ; et
- les secteurs sont donc plus légers.

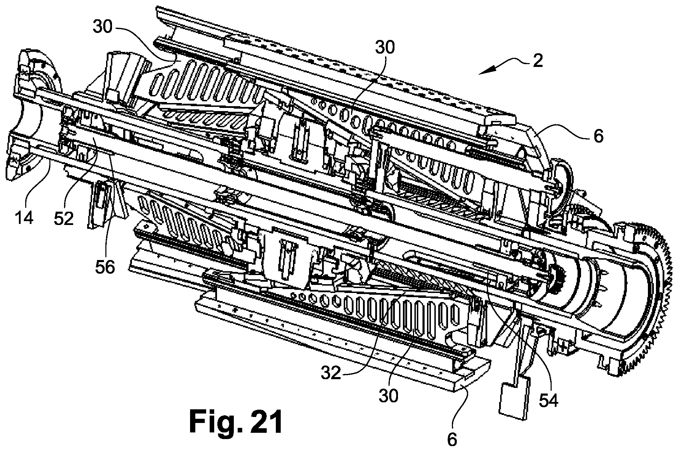

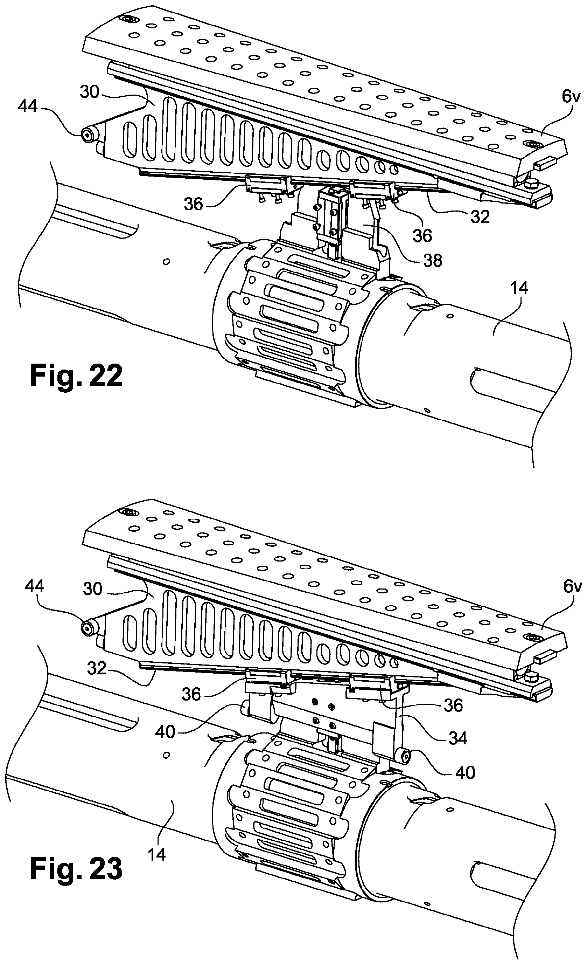

Nous allons maintenant décrire le détail du mécanisme du tambour en référence aux figures 21 à 31.

Le support 14 est formé en l'espèce par un fût d'axe 12 et de forme générale cylindrique. Sauf lorsqu'on met le tambour en rotation lors de la réalisation d'une bande de roulement, ce fût est fixe. Le tambour comprend des équerres 30 associés aux secteurs respectifs. Chaque équerre est rigidement fixée au secteur correspondant et présente une forme générale de triangle rectangle, le plus grand côté de l'équerre contiguë à son angle droit est celui auquel est fixé le secteur. L'hypoténuse de l'équerre forme un rail ou rampe 32. Il présente une forme rectiligne allongée, son orientation par rapport à l'axe 12 correspondant à la direction précitée *a* de coulissement du secteur. Tout comme les secteurs, les équerres associées aux secteurs clés sont disposées tête-bêche par rapport à celles associées aux secteurs voûtes.

Chaque équerre porte, au voisinage de l'angle droit, une roulette 44 montée libre à rotation par rapport à l'équerre autour d'un axe perpendiculaire au plan général radial de l'équerre. Les roulettes 44 associées aux secteurs clés s'étendent globalement dans un même plan perpendiculaire à l'axe 12. Celles associés aux secteurs voûtes s'étendent également dans un même plan, distinct de l'autre plan.

Le tambour comprend également des porte-secteurs 34 présentant à leur sommet deux patins 36 engagés sur le rail 32 de sorte que l'équerre est montée mobile à coulissement sur le porte-secteur. Les patins présentent un profil femelle complémentaire du profil mâle de la rampe.

Le tambour comprend en outre des platines 38 rigidement fixées au fût 14 et s'étendant en direction radiale depuis ce dernier. Chaque porte-secteur est monté mobile en coulissement radial sur la platine correspondante par des moyens adaptés non détaillés.

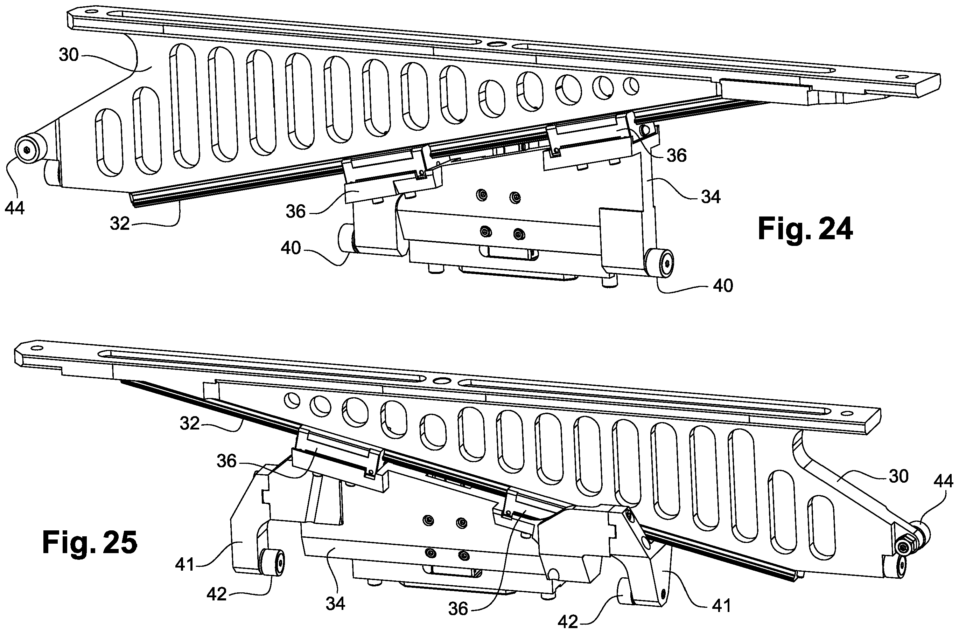

Comme illustré aux figures 24 et 25, chaque porte-secteur présente deux roulettes ou galets 40, 42. Les roulettes 40 associées aux secteurs voûtes sont disposées aux extrémités du porte-secteur tandis que les roulettes 42 associé aux secteurs clés sont portées par des bras 41 du porte secteur et font face au corps de ce dernier. Toutes les roulettes sont montées libres à rotation par rapport au porte-secteur autour d'un axe parallèle à l'axe 12.

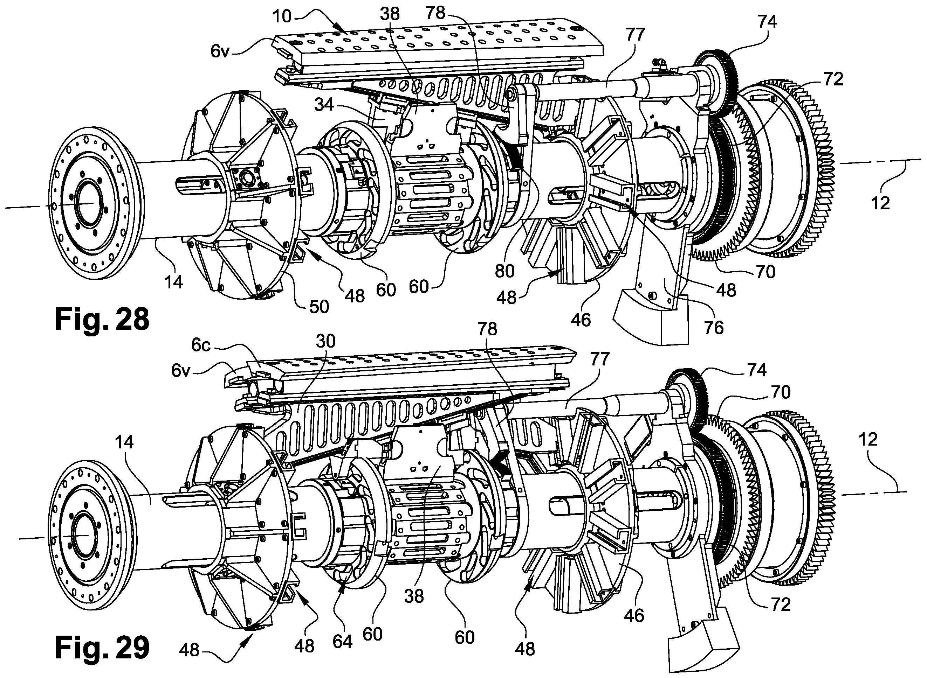

Comme illustré aux figures 28 et 29, le tambour comprend un plateau 46 en forme de disque d'axe 12 monté mobile à coulissement sur le fût 14 suivant la direction axiale. Il présente des logements profilés 48 ouverts du côté des équerres des secteurs voûtes tout le long du logement et à l'extrémité de ce dernier opposée à l'axe. Les logements reçoivent les roulettes 44 correspondantes. Le tambour comprend un plateau analogue 50 associé aux roulettes des secteurs clés.

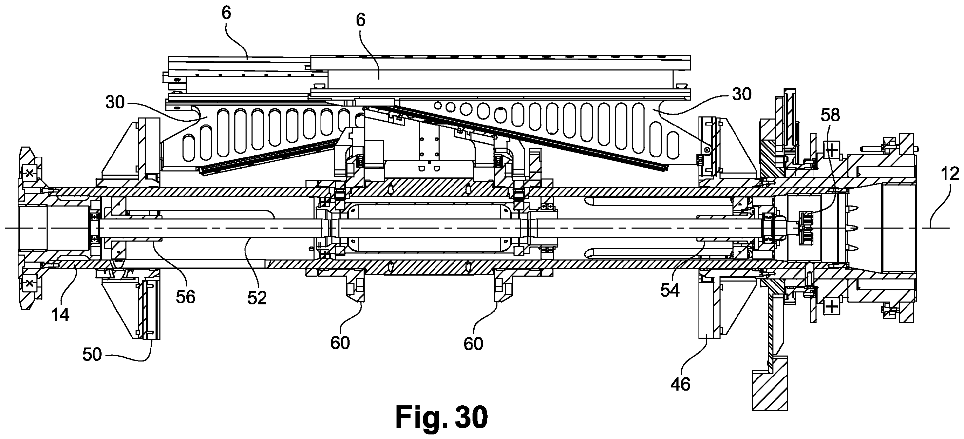

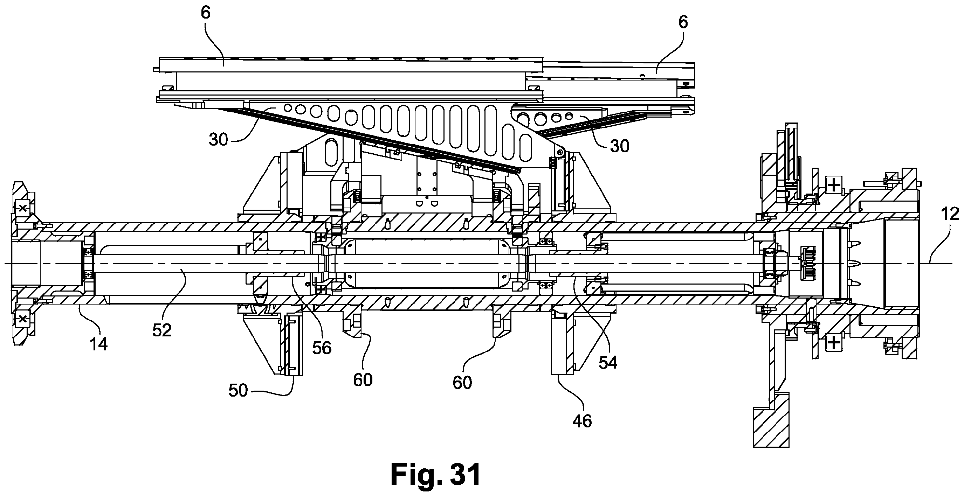

Comme illustré notamment aux figures 30 et 31, le fût 14 renferme une vis 52 présentant deux zones filetées en sens contraire. Deux écrous 54 et 56 sont en prise avec ces zones respectives et reliés rigidement aux plateaux respectifs 46, 50. La vis présente à son extrémité droite sur la figure 30 un crabot 58 servant de moyen d'accouplement avec un organe d'entraînement en rotation de la vis qui n'a pas été illustré.

Ainsi, la mise en rotation de la vis 52 à partir du crabot 58 provoque le coulissement de l'écrou 54 et du plateau 46 d'une part et celui en sens contraire de l'écrou 56 et du plateau 50 d'autre part. L'équipage formé par le plateau 46 et l'écrou 54 entraîne dans son coulissement axial les équerres 30 et les secteurs voûtes 6v. Compte tenu de la rampe, cela entraîne le déplacement des équerres et des secteurs suivant la direction inclinée par rapport à l'axe. De la même façon, l'équipage formé par le plateau 50 et l'écrou 56 entraîne les équerres 30 et les secteurs clé 6c et provoque leur déplacement selon la direction inclinée par rapport à l'axe. Ainsi, dans un premier sens de rotation, la vis provoque le rapprochement des secteurs clés et des secteurs voûtes les uns des autres en direction axiale et l'augmentation du diamètre de la face circonférentielle du tambour. Ce déplacement est montré par la succession des figures 30 et 31. Dans l'autre sens de rotation, l'éloignement des plateaux provoque la réduction de ce diamètre. C'est ainsi qu'on effectue le réglage du diamètre de la face de travail du tambour.

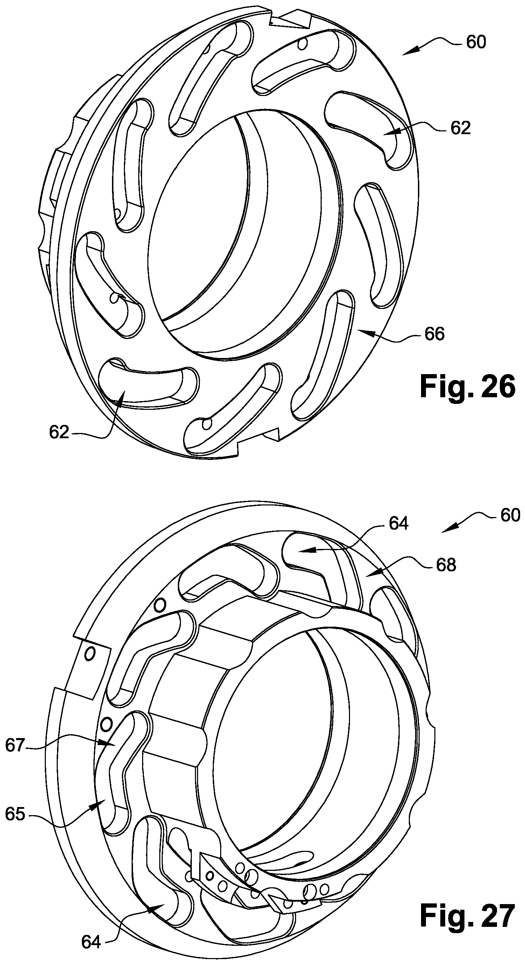

Le tambour comprend par ailleurs deux cames bifaces 60. Les deux faces de la came située le plus à droite sur la figure 28 sont illustrées aux figures 26 et 27. Les deux cames sont rigidement solidaires l'une de l'autre et montées libres à rotation sur le fût 14 autour de l'axe 12, sans possibilité de coulissement le long de ce dernier. Chaque came biface comprend un disque présentant des gorges ou rampes 62, 64 sur ses faces respectives 66, 68. Les deux cames sont symétriques l'une de l'autre par rapport à un plan perpendiculaire à l'axe 12, les faces 66 étant orientées en direction l'une de l'autre. Les gorges 62 de ces faces reçoivent les roulettes 40 respectives associées aux secteurs voûtes. Les gorges 64 des autres faces 68 reçoivent celles correspondant aux secteurs clés 6v.

Sur la came des figures 26 et 27, les gorges 62 sont identiques entre elles. Il en est de même pour les gorges 64. Chaque gorge 62 présente un très court tronçon en arc de cercle d'axe 12 contiguë au bord du disque et un tronçon principal en arc de cercle, le tronçon allant en se rapprochant de l'axe. Chaque gorge 64 comprend deux tronçons 65, 67 sensiblement de même longueur, tous deux en arc de cercle. Le premier 65 est situé au bord du disque et est centré sur l'axe 12 tandis que le second se rapproche de l'axe 12.

Le fût porte une roue 70 et un pignon 72 rigidement solidaires l'un de l'autre et tout deux montés mobiles à rotation par rapport au fût autour de l'axe 12. Le tambour comporte également un pignon 74 monté mobile à rotation autour d'un axe parallèle à l'axe 12 mais distinct de ce dernier et porté par un bras 76 lui-même porté par le fût 14. Un arbre 77 est rigidement solidaire du pignon 74 et d'un secteur denté 78 en prise avec un autre secteur denté 80 rigidement solidaire des cames 60.

Lorsqu'un pignon extérieur au tambour vient en prise avec la roue 70 pour la faire tourner, cela provoque la rotation du pignon 72, de la roue 74 et des deux secteurs dentés avec les cames 60. Compte tenu de la forme des gorges 62, les secteurs voûtes 6v sont entraînés en direction de l'axe par coulissement du porte-secteur sur la platine. Pendant ce temps, les roulettes 42 associées aux secteurs clés parcourent le premier tronçon externe 65 des gorges 64. Compte tenu de la forme de ce tronçon, ces secteurs conservent une position radiale inchangée. Le tambour passe donc de la configuration de la figure 5 à celle de la figure 6.

Au cours de la deuxième phase de la rotation des cames dans le même sens, le rapprochement radial des secteurs voûtes se poursuit et simultanément débute celui des secteur clés car les roulettes correspondantes 42 viennent maintenant en prise avec l'autre tronçon 67 des gorges 64. Les secteurs clés et les secteurs voûtes se déplacent alors simultanément en direction de l'axe. Le tambour arrive donc à la configuration de la figure 7. Cette opération de collapsage des secteurs est possible quel que soit le diamètre de réglage du tambour sauf si ce diamètre est trop petit pour permettre le déplacement radial des secteurs.

On peut également prévoir que chaque gorge des cames est réalisée de manière à ce que, pour une vitesse de rotation constante de la came, la vitesse de déplacement des secteurs soit rendue variable, par exemple progressive ou plus faible en fin de course de collapsage ou d'extension, afin de réduire les à-coups.

Comme illustré notamment à la figure 20, les secteurs-clés présentent sous chacune de leurs faces latérales 9 un dégagement ou redan 82 qui leur permet de recevoir une partie des secteurs voûtes après le début du mouvement radial de ces derniers. La poursuite du mouvement des deux types de secteurs peut donc s'effectuer avec les secteurs voûtes partiellement logés dans les dégagements. Ce dégagement permet d'éviter de déplacer les secteurs voûte sur une course radiale trop longue dans la première phase et donc permet de réduire les temps de cycle.

Dans la position de la figure 7, il est facile d'extraire la bande de roulement du tambour au moyen d'un outillage adapté. Une fois cette extraction achevée, on actionne le mécanisme en sens inverse pour replacer les secteurs dans leur position d'origine.

Les deux mécanismes, permettant respectivement le réglage du diamètre et le collapsage, sont totalement indépendants. On peut donc avantageusement, lors d'un changement de dimension comportant un réglage à un nouveau diamètre, commencer par collapser la forme, afin que les secteurs ne soient plus au contact les uns des autres, pour pouvoir les déplacer librement et ne pas user prématurément les faces 9.

Comme on l'a vu précédemment, le tambour 2 comporte dix-huit secteurs (6c, 6v). Ce nombre de secteurs a été choisi pour obtenir une "discrétisation" de la surface externe du tambour la plus petite possible, afin d'obtenir la meilleure régularité géométrique possible (cylindricité et continuité de la surface) sur toute la plage de réglage de diamètre, plage qui s'étend en l'espèce sur 100 mm. Ainsi, plus le nombre de secteurs est élevé, plus l'influence des irrégularités de la surface circonférentielle du tambour se trouve réduite vis-à-vis de l'uniformité de l'enveloppe de pneumatique qui est fabriquée dessus. Le mode de réalisation décrit résulte d'un compromis entre le plus grand nombre de secteurs possibles, la complexité pour loger les mécanismes permettant de piloter les différents mouvements des secteurs, et donc le prix. A cet effet, le nombre de dix-huit secteurs peut être considéré comme trop important pour pouvoir loger dix-huit rampes sur la même face d'une came de commande, tout au moins sur une came dont le diamètre est limité par les autres éléments du tambour. C'est pourquoi le tambour 2 comprend deux cames bifaces 60 monoblocs à dix-huit rampes 62, 64, neuf rampes sur chaque face. L'utilisation de cames bifaces permet de limiter la taille et le nombre d'éléments nécessaires pour piloter ce tambour 2 de diamètre utile égal à 500 mm.

Bien entendu, on pourra apporter à l'invention de nombreuses modifications sans sortir du cadre de celle-ci.

Les mécanismes permettant au cours d'un même mouvement d'une came la descente des secteurs voûtes en premier puis celle simultanée des secteurs clés et des secteurs voûtes est applicable à d'autres types de tambour et par exemple à celui de la demande précitée WO 2013/054051.

## Revendications

1. Tambour (2) de confection d'une ébauche d'enveloppe de pneumatique, qui comporte un support (14) et des secteurs (6v, 6c) formant une face circonférentielle du tambour, chaque secteur présentant une face externe circonférentielle ayant un contour de forme générale trapézoïdale et étant monté mobile par rapport au support suivant une direction prédéterminée (13) non radiale à un axe de rotation (12) du tambour et interceptant cet axe.

2. Tambour selon la revendication précédente dans lequel chaque secteur (6v, 6c) est monté mobile à translation, notamment à coulissement rectiligne, par rapport au support suivant la direction prédéterminée.

3. Tambour selon au moins l'une quelconque des revendications précédentes dans lequel chaque secteur (6v, 6c) est monté mobile par rapport au support au moyen d'une rampe (32) s'étendant suivant la direction prédéterminée.

4. Tambour selon la revendication précédente dans lequel chaque secteur est relié au support par une équerre (30) portant la rampe.

5. Tambour selon au moins l'une quelconque des revendications précédentes agencé de sorte que l'un quelconque des secteurs (6v, 6c) ne peut pas être déplacé par rapport au support suivant la direction prédéterminée sans que les autres secteurs se déplacent eux aussi par rapport au support suivant les directions prédéterminées qui leur sont propres.

6. Tambour selon au moins l'une quelconque des revendications précédentes dans lequel les secteurs forment deux sous-ensembles agencés de sorte que, lorsque chacun des secteurs (6v) de l'un des sous-ensembles se déplace suivant la direction prédéterminée par rapport au support, il se déplace le long de l'axe dans un premier sens et les secteurs (6c) de l'autre sous-ensemble se déplacent le long de l'axe dans un deuxième sens opposé au premier sens.

7. Tambour selon la revendication précédente, agencé de sorte que les deux sous-ensembles sont l'image l'un de l'autre par une symétrie axiale.

8. Tambour selon au moins l'une quelconque des revendications précédentes qui comprend au moins un équipage (46, 54, 50, 56) monté coulissant par rapport au support suivant la direction de l'axe de rotation et relié à plusieurs des secteurs.

9. Tambour selon au moins l'une quelconque des revendications précédentes agencé de sorte que, lorsque les secteurs s'étendent à une même distance de l'axe de rotation, quelle que soit cette distance, les faces externes circonférentielles des secteurs ont des arêtes (18) présentant chacune une corde (C) confondue avec la corde correspondante du secteur adjacent.

10. Tambour selon au moins l'une quelconque des revendications précédentes dans lequel chaque secteur présente deux faces latérales principales planes (9) agencées pour venir en regard des faces homologues des secteurs adjacents.

11. Tambour selon la revendication précédente dans lequel le plan de chaque face latérale (9) est l'image d'un plan radial à l'axe de rotation (12) par une première rotation autour d'un premier axe (a1) perpendiculaire à ce dernier, et par une seconde rotation autour d'un second axe (a2) perpendiculaire au premier axe, les deux rotations ayant lieu chacune sur un angle inférieur à 90°.

12. Tambour selon la revendication précédente dans lequel l'angle de la seconde rotation est compris entre 2 et 5°.

13. Tambour selon au moins l'une quelconque des revendications précédentes dans lequel certains des secteurs (6c) sont aptes à venir en appui contre les autres secteurs (6v) suivant la direction radiale à l'axe de rotation du tambour.

14. Tambour selon au moins l'une quelconque des revendications précédentes dans lequel chaque secteur (6v, 6c) est monté mobile par rapport au support suivant une direction radiale à l'axe de rotation du tambour.

15. Tambour selon au moins l'une quelconque des revendications précédentes qui comporte au moins une came (60) de commande d'un déplacement radial des secteurs par rapport à l'axe de rotation du tambour, la came étant agencée de sorte qu'un mouvement monotone de la came entraîne d'abord le déplacement radial de certains (6v) des secteurs sans modifier une position radiale des autres secteurs (6c), puis entraîne le déplacement radial de tous les secteurs simultanément.

16. Procédé de fabrication d'une enveloppe de pneumatique, **caractérisé en ce qu'**on assemble une partie au moins d'une bande de roulement d'une ébauche crue de l'enveloppe sur un tambour (2) conforme à au moins l'une quelconque des revendications précédentes.

## Patentansprüche

1. Aufbautrommel (2) eines Reifenmantel-Rohlings, die einen Träger (14) und Sektoren (6v, 6c) umfasst, die eine Umfangsseite der Trommel bilden, wobei jeder Sektor eine äußere Umfangsseite aufweist, deren allgemeine Formkontur trapezförmig ist, und die bezogen auf den Träger in einer vorgegebenen Richtung (13), die zu einer Drehachse (12) der Trommel nicht radial ist und diese Achse abfängt, beweglich gelagert ist.

2. Trommel nach dem vorhergehenden Anspruch, wobei jeder Sektor (6v, 6c) translatorisch, insbesondere geradlinig verschiebbar, bezogen auf den Träger in der vorgegebenen Richtung beweglich gelagert ist.

3. Trommel nach mindestens einem der vorhergehenden Ansprüche, wobei jeder Sektor (6v, 6c) mittels einer Rampe (32), die sich in der vorgegebenen Richtung erstreckt, bezogen auf den Träger beweglich gelagert ist.

4. Trommel nach dem vorhergehenden Anspruch, wobei jeder Sektor über einen Winkel (30), der die Rampe trägt, mit dem Träger verbunden ist.

5. Trommel nach mindestens einem der vorhergehenden Ansprüche, derart angeordnet, dass einer der Sektoren (6v, 6c) nicht in der vorgegebenen Richtung bezogen auf den Träger bewegt werden kann, ohne dass sich die anderen Sektoren auch in ihren eigenen vorgegebenen Richtungen bezogen auf den Träger bewegen.

6. Trommel nach mindestens einem der vorhergehenden Ansprüche, wobei die Sektoren zwei Untergruppen bilden, die derart angeordnet sind, dass, wenn sich jeder der Sektoren (6v) einer der Untergruppen in der vorgegebenen Richtung bezogen auf den Träger bewegt, er sich entlang der Achse in einer ersten Richtung bewegt und die Sektoren (6c) der anderen Untergruppe sich entlang der Achse in einer zweiten Richtung bewegen, die der ersten Richtung entgegengesetzt ist.

7. Trommel nach dem vorhergehenden Anspruch, derart angeordnet, dass die zwei Untergruppen aufgrund einer Achsensymmetrie Bilder voneinander sind.

8. Trommel nach mindestens einem der vorhergehenden Ansprüche, die mindestens eine Ausrüstung (46, 54, 50, 56) umfasst, die bezogen auf den Träger in der Richtung der Drehachse verschiebbar gelagert und mit mehreren der Sektoren verbunden ist.

9. Trommel nach mindestens einem der vorhergehenden Ansprüche, derart angeordnet, dass, wenn sich die Sektoren in einem selben Abstand zu der Drehachse erstrecken, egal wie groß dieser Abstand ist, die äußeren Umfangsseiten der Sektoren Kanten (18) aufweisen, die jeweils eine Schnur (C) aufweisen, die mit der entsprechenden Schnur des angrenzenden Sektors vermischt ist.

10. Trommel nach mindestens einem der vorhergehenden Ansprüche, wobei jeder Sektor zwei flache Hauptseitenflächen (9) aufweist, die angeordnet sind, den homologen Seiten der angrenzenden Sektoren gegenüberzuliegen.

11. Trommel nach dem vorhergehenden Anspruch, wobei die Ebene jeder Seitenfläche (9) das Bild einer Radialebene zur Drehachse (12) durch eine erste Drehung um eine erste Achse (a1), die zu letzterer senkrecht ist, und durch eine zweite Drehung um eine zweite Achse (a2), die zu der ersten Achse senkrecht ist, ist, wobei die zwei Drehungen jeweils um einen Winkel kleiner als 90° erfolgen.

12. Trommel nach dem vorhergehenden Anspruch, wobei der Winkel der zweiten Drehung zwischen 2 und 5° beträgt.

13. Trommel nach mindestens einem der vorhergehenden Ansprüche, wobei einige der Sektoren (6c) in der Lage sind, gegen die anderen Sektoren (6v) in radialer Richtung zur Drehachse der Trommel in Anlage zu kommen.

14. Trommel nach mindestens einem der vorhergehenden Ansprüche, wobei jeder Sektor (6v, 6c) in einer radialen Richtung zur Drehachse der Trommel bezogen auf den Träger beweglich gelagert ist.

15. Trommel nach mindestens einem der vorhergehenden Ansprüche, die mindestens einen Nocken (60) zum Steuern einer radialen Verschiebung der Sektoren bezogen auf die Drehachse der Trommel umfasst, wobei der Nocken derart angeordnet ist, dass eine monotone Bewegung des Nockens zuerst die radiale Verschiebung einiger (6v) der Sektoren zur Folge hat, ohne eine radiale Position der anderen Sektoren (6c) zu verändern, dann die radiale Verschiebung aller Sektoren gleichzeitig zur Folge hat.

16. Verfahren zur Herstellung eines Reifenmantels, **dadurch gekennzeichnet, dass** ein Teil zumindest einer Lauffläche eines Rohlings des Mantels auf einer Trommel (2) zusammengesetzt wird, die mindestens einem der vorhergehenden Ansprüche entspricht.

## Claims

1. Drum (2) for producing a tyre casing blank, which comprises a support (14) and sectors (6v, 6c) forming a circumferential face of the drum, each sector having a circumferential outer face having a contour of general trapezoidal form and being mounted so as to be movable relative to the support in a non-radial predetermined direction (13) relative to an axis (12) of rotation of the drum and intercepting this axis.

2. Drum according to the preceding claim, wherein each sector (6v, 6c) is mounted so as to be movable in translation, particularly in rectilinear sliding, relative to the support in the predetermined direction.

3. Drum according to at least either of the preceding claims, wherein each sector (6v, 6c) is mounted so as to be movable relative to the support by means of a ramp (32) extending in the predetermined direction.

4. Drum according to the preceding claim, wherein each sector is connected to the support by an angle plate (30) carrying the ramp.

5. Drum according to at least any one of the preceding claims, arranged such that any one of the sectors (6v, 6c) cannot be moved relative to the support in the predetermined direction without the other sectors, also, moving relative to the support in the predetermined directions specific to them.

6. Drum according to at least any one of the preceding claims, wherein the sectors form two subassemblies arranged such that, when each of the sectors (6v) of one of the subassemblies moves in the predetermined direction relative to the support, it moves along the axis in a first direction and the sectors (6c) of the other subassembly move along the axis in a second direction, which is the opposite of the first direction.

7. Drum according to the preceding claim, arranged such that the two subassemblies are the axially symmetric image of one another.

8. Drum according to at least any one of the preceding claims, which comprises at least one set of equipment (46, 54, 50, 56) mounted so as to slide relative to the support in the direction of the axis of rotation and connected to a plurality of the sectors.

9. Drum according to at least any one of the preceding claims, arranged such that, when the sectors extend to the same distance from the axis of rotation, irrespective of what that distance might be, the circumferential outer faces of the sectors have edges (18) each having a chord (C) merged with the corresponding chord of the adjacent sector.

10. Drum according to at least any one of the preceding claims, wherein each sector has two principal planar lateral faces (9) arranged in order to be placed opposite the homologous faces of the adjacent sectors.

11. Drum according to the preceding claim, wherein the plane of each lateral face (9) is the image of a radial plane relative to the axis (12) of rotation through a first rotation about a first axis (a1) perpendicular thereto, and through a second rotation about a second axis (a2) perpendicular to the first axis, the two rotations each taking place over an angle of less than 90°.

12. Drum according to the preceding claim, wherein the angle of the second rotation is between 2 and 5°.

13. Drum according to at least any one of the preceding claims, wherein certain sectors (6c) are capable of being placed so as to bear against the other sectors (6v) in the radial direction relative to the axis of rotation of the drum.

14. Drum according to at least any one of the preceding claims, wherein each sector (6v, 6c) is mounted so as to be movable relative to the support in a radial direction relative to the axis of rotation of the drum.

15. Drum according to at least any one of the preceding claims, which comprises at least one cam (60) for controlling a radial movement of the sectors relative to the axis of rotation of the drum, the cam being arranged such that a monotonous movement of the cam gives rise, first, to the radial movement of certain (6v) of the sectors without modifying a radial position of the other sectors (6c), and then gives rise to the radial movement of all the sectors simultaneously.

16. Method for producing a tyre casing, **characterized in that** a portion at least of a tread of a green blank of the casing is assembled on a drum (2) in accordance with at least any one of the preceding claims.
